# EUROPÄISCHE PATENTANMELDUNG

(11) **EP 4 686 644 A1**
(43) Veröffentlichungstag der Anmeldung: **04.02.2026**
(21) Anmeldenummer: 25187170.3
(22) Anmeldetag: 03.07.2025
(51) Int. Cl.: B62D 33/06

(54) **KABINENLAGERUNG FÜR EINE FAHRKABINE EINER LANDWIRTSCHAFTLICHEN ARBEITSMASCHINE, FAHRERKABINE FÜR EINE LANDWIRTSCHAFTLICHE ARBEITSMASCHINE SOWIE LANDWIRTSCHAFTLICHE ARBEITSMASCHINE**

(30) Priorität: 01.08.2024 DE 102024121960
(71) Anmelder: CLAAS Tractor S.A.S., 78141 Vélizy-Villacoublay Cedex (FR)
(72) Erfinder: Monnaie, Paul, 78330 Fontenay Le Fleury (FR); Plancq, Kevin, 78320 Levis Saint Nom (FR); Gicquel, Guénolè, 78690 Les Essarts-le-Roi (FR); Villette, Clement, 58310 BOUHY (FR); Clerc, Baptiste, 72000 LE MANS (FR); Degoulet, Pierre, 727000 Allonnes (FR); Raye, Isabelle, 72700 Rouillon (FR); Perrot, Guilaume, 95000E Eaubonne (FR)
(74) Vertreter: CLAAS Gruppe

(57) **Zusammenfassung**

Die vorliegende Anmeldung betrifft eine Kabinenlagerung (1) für eine Fahrerkabine (2) einer landwirtschaftlichen Arbeitsmaschine (3), insbesondere eines Traktors, umfassend zwei vordere Lagerstellen (4) und zwei hintere Lagerstellen (5), wobei die Lagerstellen (4, 5) jeweils ein Dämpfermodul (6) zur Dämpfung von Vertikalbewegungen umfassen, über die die Fahrerkabine (2) beweglich an einem Maschinenrahmen (7) der Arbeitsmaschine (3) lagerbar ist, wobei die Lagerstellen (4, 5) jeweils ein unteres Verbindungselement (8) zur Verbindung mit dem Maschinenrahmen (7) der Arbeitsmaschine (3) aufweisen, wobei die Lagerstellen (4, 5) jeweils ein oberes Verbindungselement (9) zur Verbindung mit einem Rahmenabschnitt (10) eines Kabinenrahmens (11) der Fahrerkabine (2) aufweisen.

Um eine Kabinenlagerung bereitzustellen, die im Betrieb der Arbeitsmaschine auftretende Schwingungen der Fahrerkabine zuverlässiger kompensiert und sich gleichzeitig durch eine geringere Komplexität und einen geringeren Montageaufwand auszeichnet, wird erfindungsgemäß vorgeschlagen, dass die vorderen Lagerstellen (4) jeweils ein Querverbindungselement (12) umfassen, wobei das jeweilige Querverbindungselement (12) schwenkbeweglich sowohl mit dem jeweiligen Dämpfermodul (6) als auch dem unteren Verbindungselement (8) der zugehörigen Lagerstelle (4) verbunden ist, wobei das jeweilige Querverbindungselement (12) einen sich zumindest im Wesentlichen in vertikale Richtung erstreckenden Kopplungszapfen (13) umfasst, wobei das Querverbindungselement (12) mittels des Kopplungszapfens (13) unter Zwischenschaltung eines Dämpfungselements (14) mit dem oberen Verbindungselement (9) gekoppelt ist.

## Beschreibung

Die vorliegende Anmeldung betrifft eine Kabinenlagerung für eine Fahrerkabine einer landwirtschaftlichen Arbeitsmaschine gemäß dem Oberbegriff von Anspruch 1. Ferner betrifft die vorliegende Anmeldung eine Fahrerkabine für eine landwirtschaftliche Arbeitsmaschine gemäß dem Oberbegriff von Anspruch 10. Ferner betrifft die vorliegende Anmeldung eine landwirtschaftliche Arbeitsmaschine gemäß dem Oberbegriff von Anspruch 11.

Der Begriff "Kabinenlagerung" bezieht sich im Sinne der vorliegenden Anmeldung auf die Struktur, die es ermöglicht, die Fahrerkabine einer landwirtschaftlichen Arbeitsmaschine an einem Maschinenrahmen der Arbeitsmaschine zu befestigen und gleichzeitig vertikale Bewegungen durch Dämpfermodule zu dämpfen.

Unter einer "Fahrerkabine" wird im Sinne der vorliegenden Anmeldung der räumlich umbaute Raum der Arbeitsmaschine verstanden, der bestimmungsgemäß dazu vorgesehen und eingerichtet ist, dass sich ein Maschinenführer der Arbeitsmaschine zum Zweck des Betriebs der Arbeitsmaschine darin aufhält. In der Fahrerkabine befindet sich typischerweise mindestens ein Fahrersitz, auf dem der Maschinenführer Platz nehmen kann. Ferner sind Steuermittel zur Steuerung und Kontrolle der Arbeitsmaschine in der Fahrerkabine angeordnet, und zwar bevorzugt in räumlicher Zuordnung zu dem Fahrersitz, sodass der Maschinenführer die Steuermittel von dem Fahrersitz aus bedienen kann.

Der Begriff "Maschinenrahmen" bezieht sich hier auf die strukturelle Basis der landwirtschaftlichen Arbeitsmaschine, an dem die Kabinenlagerung befestigt ist und der die Fahrerkabine trägt. Der Maschinenrahmen wird in der Technik mitunter auch als Chassis oder Fahrgestell bezeichnet.

Bei der landwirtschaftlichen Arbeitsmaschine handelt es sich beispielsweise und vorzugsweise um einen Traktor, einen Mähdrescher oder einen Feldhäcksler. Die landwirtschaftliche Arbeitsmaschine ist zur Erledigung landwirtschaftlicher Arbeitsaufträge vorgesehen und eingerichtet.

Aus DE 10 2015 115 009 A1 ist eine Kabinenlagerung bzw. ein Dämpfungssystem für eine Fahrerkabine mit vier Lagerstellen (zwei vorderen Lagerstellen und zwei hinteren Lagerstellen) bekannt, wobei die Kabinenlagerung Mittel zur Dämpfung von Vertikalbewegungen sowie zumindest ein sich im Wesentlichen senkrecht zur Verformungsrichtung der Mittel zur Dämpfung von Vertikalbewegungen erstreckendes Mittel zur Dämpfung von Roll- und Wankbewegungen (auch als Querstabilisator oder Wankstabilisator bzw. "anti-roll bar" bezeichnet) umfasst. Jede Lagerstelle weist ein unteres Verbindungselement und ein oberes, einen Anlenkpunkt umfassendes Verbindungselement auf, wobei das untere Verbindungselement und das obere Verbindungselement einer Lagerstelle jeweils durch die Mittel zur Dämpfung von Vertikalbewegungen relativ zueinander beweglich miteinander verbunden sind. Zumindest die zwei oberen Verbindungselemente der hinteren Lagerstellen sind durch die Mittel zur Dämpfung von Roll- und Wankbewegungen, welche als ein quer zur Längsachse des Dämpfungssystems orientierter Führungsstab ausgebildet sind, miteinander verbunden. Weiterhin umfassen die unteren Verbindungselemente der vorderen Lagerstellen jeweils einen sich parallel zu dem Führungsstab erstreckenden Querholm, welcher das untere Verbindungselement und das obere Verbindungselement dieser Lagerstellen miteinander verbindet und an jedem der Verbindungselemente angelenkt ist.

Weiterhin ist aus der EP 2 300 303 B1 eine ähnliche Aufhängung für eine Fahrerkabine eines Traktors bekannt. Jede Ecke der Fahrerkabine ist durch eine fluidische Dämpfer-/Feder-Einheit abgestützt. Ferner ist ein Querstabilisator vorgesehen, welcher zwischen der Fahrerkabine und dem Chassis angeordnet ist zur Kompensation von Roll- und Wankbewegungen der Fahrerkabine relativ zum Chassis. Die Dämpfer-/Feder-Einheiten der beiden vorderen Ecken der Fahrerkabine sind mit dem Chassis über eine Verbindungsstrebe mit einer festen Länge verbunden, die sich grundsätzlich quer relativ zu dem Chassis erstreckt. Mit dem einen Ende ist die Verbindungsstrebe an dem Chassis und mit dem anderen Ende an der Fahrerkabine jeweils schwenkbeweglich um Achsen, die sich grundsätzlich in Längsrichtung relativ zu dem Chassis erstrecken, angebunden, wodurch die Fahrerkabine sich grundsätzlich vertikal relativ zum Chassis bewegen kann, allerdings ein Widerstand gegenüber einer Querbewegung der Fahrerkabine relativ zu dem Chassis geschaffen wird.

Der vorliegenden Anmeldung liegt die Aufgabe zugrunde, eine Kabinenlagerung anzugeben, die im Betrieb der Arbeitsmaschine auftretende Schwingungen der Fahrerkabine zuverlässiger kompensiert, wodurch sie den Fahrkomfort erhöht, und sich gleichzeitig durch eine geringere Komplexität und einen geringeren Montageaufwand auszeichnet.

Die zugrunde liegende Aufgabe wird mittels einer Kabinenlagerung mit den Merkmalen des Anspruchs 1 gelöst. Vorteilhafte Ausgestaltungen ergeben sich aus den zugehörigen Unteransprüchen sowie der Beschreibung.

Die Kabinenlagerung umfasst zwei vordere Lagerstellen und zwei hintere Lagerstellen, wobei die Lagerstellen jeweils ein Dämpfermodul zur Dämpfung von Vertikalbewegungen umfassen, über die die Fahrerkabine beweglich an einem Maschinenrahmen der Arbeitsmaschine lagerbar ist. Bei dem Dämpfermodul kann es sich beispielsweise und vorzugsweise um einen hydraulischen Dämpfer, einen Federdämpfer oder einen Reibungsdämpfer handeln. Die Lagerstellen weisen jeweils ein unteres Verbindungselement zur Verbindung mit dem Maschinenrahmen der Arbeitsmaschine auf, und die Lagerstellen weisen jeweils ein oberes Verbindungselement zur Verbindung mit einem Rahmenabschnitt eines Kabinenrahmens der Fahrerkabine auf. Bei den Verbindungselementen kann es sich beispielsweise um aus Stahl gefertigte Halterungen handeln, die fest mit dem jeweils zugeordneten Bauteil verbunden, beispielsweise verschraubt oder verschweißt, sind.

Erfindungsgemäß umfassen die vorderen Lagerstellen jeweils ein Querverbindungselement, wobei das jeweilige Querverbindungselement schwenkbeweglich sowohl mit dem jeweiligen Dämpfermodul als auch mit dem unteren Verbindungselement der zugehörigen Lagerstelle verbunden ist. Es kann somit eine gute Verschwenkung des Querverbindungselements in vertikale Richtung stattfinden, wodurch vertikale Schwingungen des Maschinenrahmens von der Kabinenlagerung ausgeglichen und somit nicht auf den Kabinenrahmen der Fahrerkabine übertragen werden.

Die Querverbindungselemente sind beispielsweise und vorzugsweise aus Stahl gefertigt.

Das jeweilige Querverbindungselement umfasst einen sich zumindest im Wesentlichen in vertikale Richtung erstreckenden Kopplungszapfen. Eine Längsachse des Kopplungszapfens ist vorzugsweise senkrecht zu einer Längsachse des Querverbindungselements angeordnet. Das Querverbindungselement ist mittels des Kopplungszapfens unter Zwischenschaltung eines Dämpfungselements mit dem oberen Verbindungselement gekoppelt, vorzugsweise lösbar gekoppelt.

Die vorliegende Erfindung hat viele Vorteile. Durch die Verwendung von Dämpfermodulen an den vorderen und hinteren Lagerstellen können Vertikalbewegungen der Kabinenrahmens gedämpft werden. Ferner wird die Dämpfungswirkung der Vertikalbewegungen des Kabinenrahmens dadurch weiter verbessert, dass an den beiden vorderen Lagerstellen jeweils das Querverbindungselement angeordnet ist, welches schwenkbeweglich sowohl mit dem jeweiligen Dämpfermodul als auch mit dem unteren Verbindungselement der zugehörigen Lagerstelle verbunden ist. Eine effektive Dämpfung und Stabilisierung der Fahrerkabine ist deshalb wünschenswert, um den Komfort des Fahrers zu steigern sowie Materialermüdung und Verschleiß entgegenzuwirken. Aufgrund der Dämpfungswirkung wird die Übertragung von Schwerkräften auf die Verbindungselemente minimiert und somit die Lebensdauer der Kabinenlagerung sowie der Fahrerkabine erhöht. Durch die Dämpfungswirkung sind Unebenheiten im Gelände annährend unbemerkbar für den Fahrer, wodurch der Fahrkomfort deutlich verbessert wird.

Durch die Integration des sich zumindest im Wesentlichen in vertikaler Richtung erstreckenden Kopplungszapfens wird eine präzise Kopplung zwischen dem jeweiligen Querverbindungselement, dem zugeordneten oberen Verbindungselement und dem dazwischen gelagerten Dämpfermodul erreicht. Der Kopplungszapfen verhindert eine Verschiebung der drei Bauteile weg von der Vertikalachse des Kopplungszapfens, sodass eine effektive Kraftübertragung und somit eine verbesserte Dämpfung, Stabilität und Kontrolle der Fahrerkabine unter verschiedenen Arbeitsbedingungen vorliegt.

Insgesamt ermöglicht die erfindungsgemäße Kabinenlagerung eine verbesserte Dämpfung von Vertikalbewegungen und eine stabile Verbindung zwischen dem Kabinenrahmen und dem Maschinenrahmen der jeweiligen landwirtschaftlichen Arbeitsmaschine. Durch die Verwendung der Querverbindungselemente, der Kopplungszapfen und den Dämpfungselementen wird eine klare Struktur geschaffen, die eine einfache Montage und Wartung der Kabinenlagerung sowie eine möglichst verschleißarme Dämpfung des Kabinenrahmens ermöglicht. Ein weiterer Vorteil ist dadurch gegeben, dass mit der spezifischen Ausgestaltung der Kabinenlagerung eine effektive Dämpfung von Betriebsgeräuschen erreicht wird, was zu einer ruhigeren Arbeitsumgebung innerhalb der Fahrerkabine führt.

Eine vorteilhafte Ausgestaltung der Kabinenlagerung sieht vor, dass der Kopplungszapfen das Dämpfungselement in vertikale Richtung durchdringt, wobei ein Endabschnitt des Kopplungszapfens in vertikale Richtung über ein oberes Ende des Dämpfungselements übersteht. Dies bringt den Vorteil mit sich, dass der Kopplungszapfen in vertikale Richtung nicht nur das Dämpfungselement, sondern auch noch weitere Bauteile zentriert auf dem Querverbindungselement exakt ausrichten kann. Die exakte Ausrichtung des Dämpfungselements auf dem Querverbindungselement wird durch den Kopplungszapfen vereinfacht und optimiert somit die Dämpfungseigenschaften der erfindungsgemäßen Kabinenlagerung.

Der über das obere Ende des Dämpfungselements überstehende Endabschnitt des Kopplungszapfens bietet eine einfache Möglichkeit zur Anpassung und Feinabstimmung der Dämpfungselements, was zu einer verbesserten Anpassungsfähigkeit an unterschiedliche Lastbedingungen führt. Es können beispielsweise je nach Maschinengestell und Fahrerkabine unterschiedliche Dämpfungselemente oder obere Verbindungselemente unterschiedlichen Bautyps zum Einsatz kommen. Ein überstehender Endabschnitt lässt hier variablen Spielraum abgestimmt auf die unterschiedlichen Einsatzgebiete zu.

In besonders bevorzugter Weise ist vorgesehen, dass der Kopplungszapfen in seinem Endabschnitt mit einem Anschlagmittel zusammenwirkt, der einen vertikalen Anschlag für das Dämpfungselement bereitstellt. Vorzugsweise ist der Kopplungszapfen in seinem Endabschnitt mit einem Außengewinde versehen und das Anschlagmittel von einer mit einem Innengewinde versehenen Schraubenmutter gebildet, die auf den Endabschnitt des Kopplungszapfens aufgeschraubt ist. Die Zusammenwirkung des Endabschnitts des Kopplungszapfens mit einem Anschlagmittel ermöglicht eine präzise Begrenzung des Dämpfungsweges, was zu einer erhöhten Sicherheit und Vermeidung von Überlastungsschäden an der Kabinenlagerung führt. Ebenso stellt die Kombination aus dem Kopplungszapfen und dem Anschlagmittel eine zuverlässige Sicherung des oberen Verbindungsmittels mit dem Querverbindungselement her, sodass die Fahrerkabine zuverlässig mit dem Maschinengestell verbunden ist.

Ferner ermöglicht die Verwendung einer Schraubenmutter mit Innengewinde als Anschlagmittel eine einfache und effektive Möglichkeit zur Einstellung der Anschlagposition, was eine individuelle Anpassung an unterschiedliche Betriebsbedingungen und Fahrergewohnheiten ermöglicht. Eine Schraubenverbindung lässt sich leicht wieder lösen, sodass Wartungsarbeiten mit geringem Aufwand durchgeführt werden können.

In einer weiteren Ausführungsform der Kabinenlagerung ist das obere Verbindungselement von einem U-förmigen, seitlich offenen Profilteil gebildet. Die Ausführung des U-förmigen, seitlich offenen Profilteils als oberes Verbindungselement vereinfacht die Montage und Demontage des oberen Verbindungselements mit dem Querverbindungselement, da es eine gute seitliche Zugänglichkeit zum Befestigen des Anschlagmittels mit dem Kopplungszapfen ermöglicht. Weiterhin gewährleistet die Verwendung eines U-förmigen Profilteils als oberes Verbindungselement und die Durchdringung des Kopplungszapfens durch die Basis des Profilteils eine stabile Verbindung zwischen dem oberen Verbindungselement und dem Querverbindungselement und somit zwischen der Fahrerkabine und dem Maschinenrahmen.

Die seitliche Offenheit des Profilteils ermöglicht eine gewisse seitliche Bewegungsfreiheit, die zur Kompensation von Querkräften und zur Vermeidung von Spannungen im Kabinenrahmen beiträgt. Ferner wird je nach Ausgestaltung ein händischer Zugriff auf das Dämpfungselement, den Kopplungszapfen und/oder das Anschlagmittel erleichtert, um ggf. Reparaturen oder Einstellungen vornehmen zu können.

Weiterhin kann eine solche Ausgestaltung der Kabinenlagerung vorteilhaft sein, bei der der Kopplungszapfen eine untere, horizontal orientierte Basis des Profilteils, vorzugsweise zentral, in vertikale Richtung durchdringt. Die zentrale Positionierung des Kopplungszapfens innerhalb des Profilteils trägt zu einer symmetrischen Kraftübertragung und somit zu einer gleichmäßigen Lastverteilung bei, was die Effizienz der Dämpfung erhöht und die Wahrscheinlichkeit von ungleichmäßigem Verschleiß reduziert.

Eine weitere vorteilhafte Ausgestaltung der Kabinenlagerung sieht vor, dass der Kopplungszapfen mittels einer formschlüssigen, kraftschlüssigen oder stoffschlüssigen Verbindung mit einem Grundkörper des Querverbindungselements in Kraft übertragender Weise verbunden ist oder der Kopplungszapfen als integraler Bestandteil des Querverbindungselements ausgebildet ist. Die Verwendung einer formschlüssigen, kraftschlüssigen oder stoffschlüssigen Verbindung ermöglicht eine zuverlässige Kraftübertragung zwischen dem Kopplungszapfen und dem Grundkörper des Querverbindungselements, was zu einer erhöhten Stabilität und Langlebigkeit der Kabinenlagerung führt.

Durch die Integration des Kopplungszapfens als integralen Bestandteil des Querverbindungselements werden Montageschritte vereinfacht und die Anzahl der Einzelteile reduziert, was die Herstellungskosten senkt und die Fehleranfälligkeit während des Montageprozesses minimiert. Die Integration des Kopplungszapfens als integraler Bestandteil des Querverbindungselements wird vorzugsweise dadurch ermöglicht, dass bei der Herstellung des Querverbindungselements der Kopplungszapfen direkt mit ausgebildet wird, beispielsweise durch Kaltverformung, Stanzung oder Gießen. Das Querverbindungselement und der Kopplungszapfen bilden sodann eine Einheit.

Das Querverbindungselement sowie der Kopplungszapfen sind vorzugsweise aus Stahl gebildet.

Bezüglich der Montage des Kabinenrahmens auf dem Maschinenrahmen, sieht eine besonders vorteilhafte Ausgestaltung bei den vorderen Lagerstellen jeweils zumindest ein Kompressionselement vor, welches dazu vorgesehen und eingerichtet sind, die Querverbindungselemente in einem Montagezustand der Fahrerkabine auf dem Maschinenrahmen zumindest annährend horizontal auszurichten. Eine horizontale Ausrichtung des Querverbindungselements ist dann gegeben, wenn die Längsachse des Querverbindungselements zumindest annährend horizontal ausgerichtet ist. Es ist vorteilhaft, wenn das Querverbindungselement in dem Montagezustand der Fahrerkabine nicht schwenkt, sondern fest in seiner horizontalen Ausrichtung verbleibt. Eine horizontale Ausrichtung ist insbesondere deshalb wünschenswert, damit die Vertikalachse des Kopplungszapfens zumindest annährend vertikal ausgerichtet ist. Die Kopplungszapfen der beiden vorderen Lagerstellen sind sodann in eine gleiche Richtung ausgerichtet und zumindest im Wesentlichen parallel zueinander orientiert. Insbesondere bei der gleichzeitigen Verbindung mehrerer oberer Verbindungselement mit dem jeweiligen Kopplungszapfen ist eine gleiche Ausrichtung der Kopplungszapfen wünschenswert, da somit die Montage deutlich vereinfacht werden kann. Der Kabinenrahmen kann dann möglichst gerade in vertikale Richtung auf die unteren Verbindungselemente mit den Querverbindungselements gesenkt werden. Anschließend kann das Kompressionselement wieder gelöst werden, wobei die Fahrerkabine dann in ihren Betriebszustand überführt wird und somit eine Dämpfungswirkung der Kabinenlagerung gegeben ist.

Eine vorteilhafte Weiterentwicklung der Erfindung sieht mindestens ein Dämpfungsmittel zur Dämpfung von Roll- und Wankbewegungen vor, wobei vorzugsweise das Dämpfungsmittel sich zumindest im Wesentlichen horizontal erstreckt. Die horizontale Ausrichtung des Dämpfungsmittels trägt dazu bei, die Übertragung von Roll- und Wankbewegungen auf die Fahrerkabine zu minimieren, was den Komfort für den Bediener erhöht. Weiterhin kann damit eine gleichmäßige Lastverteilung erreicht werden, die zu einer verbesserten Dämpfungsleistung bei unterschiedlichen Fahrbedingungen führt.

Dabei ist es von Vorteil, wenn das Dämpfungsmittel als ein zumindest im Wesentlichen horizontal orientierter Führungsstab ausgeführt ist, der an seinen einander gegenüberliegenden Enden an den beiden vorderen Lagerstellen oder an den beiden hinteren Lagerstellen gelenkig gelagert ist. Die Ausführung des Dämpfungsmittels als horizontal orientierter Führungsstab, der gelenkig an den Lagerstellen gelagert ist, ermöglicht eine präzise Führung der Fahrerkabine und trägt zur Reduzierung von Querbewegungen und Vibrationen bei. Die Belastung auf die Lagerstellen wird reduziert und die Lebensdauer der Kabinenlagerung verlängert.

Ferner sieht die Erfindung eine Fahrerkabine für eine landwirtschaftliche Arbeitsmaschine, insbesondere einen Traktor, mit den Merkmalen des Anspruchs 10 vor. Die Fahrerkabine umfasst einen Kabinenrahmen, an dem Kabinenrahmen angeordnete Raumbegrenzungselemente zur Begrenzung eines Innenraums der Fahrerkabine sowie eine Kabinenlagerung zur Lagerung der Fahrerkabine an einem Maschinenrahmen der Arbeitsmaschine. Erfindungsgemäß ist vorgesehen, dass die Kabinenlagerung gemäß einem der Ansprüche 1 bis 9 ausgebildet ist. Die Vorteile einer derartigen Kabinenlagerung sind oben bereits dargelegt worden. Insgesamt lässt sich sagen, dass mittels der erfindungsgemäßen Kabinenlagerung verbesserte Dämpfungseigenschaften gegenüber den aus dem Stand der Technik bekannten Kabinenlagerungen erzielt werden können, was zu einem erhöhten Komfort des Bedieners in der Fahrerkabine führt und den Verschleiß der Kabinenlagerung reduziert. Es lässt sich somit sagen, dass die Integration der Kabinenlagerung gemäß den vorhergehenden Ansprüchen in die Fahrerkabine einer landwirtschaftlichen Arbeitsmaschine eine optimierte Schwingungsisolation gewährleistet und somit den Komfort für den Bediener erhöht.

Ein weiterer Vorteil ist dadurch gegeben, dass mit der spezifischen Ausgestaltung der Kabinenlagerung eine effektive Dämpfung von Betriebsgeräuschen erreicht wird, was zu einer ruhigeren Arbeitsumgebung innerhalb der Fahrerkabine führt.

Des Weiteren wird die zugrundeliegende Aufgabe durch eine landwirtschaftliche Arbeitsmaschine, insbesondere einen Traktor, mit den Merkmalen des Anspruchs 11 gelöst. Diese Arbeitsmaschine umfasst einen Maschinenrahmen sowie eine an dem Maschinenrahmen gelagerte Fahrerkabine, wobei die Fahrerkabine gemäß Anspruch 10 ausgebildet ist. Eine derartig ausgebildete Fahrerkabine in einer landwirtschaftlichen Arbeitsmaschine trägt zu einer verbesserten Ergonomie der Arbeitsmaschine bei, indem sie die durch den Maschinenbetrieb verursachten Vibrationen und Stöße besser absorbiert. Die spezielle Konstruktion der Fahrerkabine ermöglicht eine bessere Anpassung an unterschiedliche Arbeitsbedingungen und erhöht die Gesamtproduktivität der Arbeitsmaschine durch die Reduzierung von Ermüdungserscheinungen beim Bediener. Weitere Vorteile entsprechen den zuvor aufgeführten Vorteilen.

Die Erfindung ist nachstehend anhand eines Ausführungsbeispiels, das in den Figuren dargestellt ist, näher erläutert. Es zeigt:
- Fig. 1:: Arbeitsmaschine mit einer erfindungsgemäßen Kabinenlagerung,
- Fig. 2:: Kabinenlagerung mit Fahrerkabine gemäß Figur 1,
- Fig. 3:: Vordere Lagerstelle der erfindungsgemäßen Kabinenlagerung gemäß Figur 2,
- Fig. 4:: Vergrößerter Teilausschnitt der vorderen Lagenstelle gemäß Figur 3.

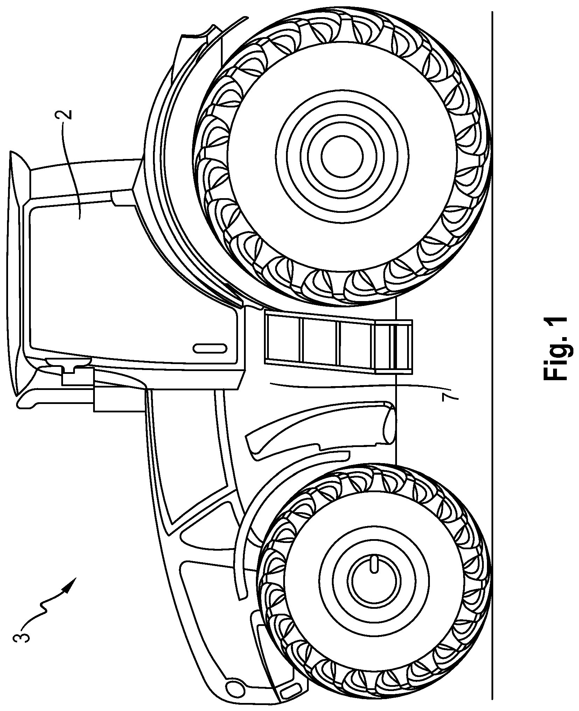

Ein Ausführungsbeispiel, das in den **Figuren 1 bis 4** dargestellt ist, zeigt eine erfindungsmäße Kabinenlagerung 1, die in einer landwirtschaftlichen Arbeitsmaschine 3 Verwendung findet.

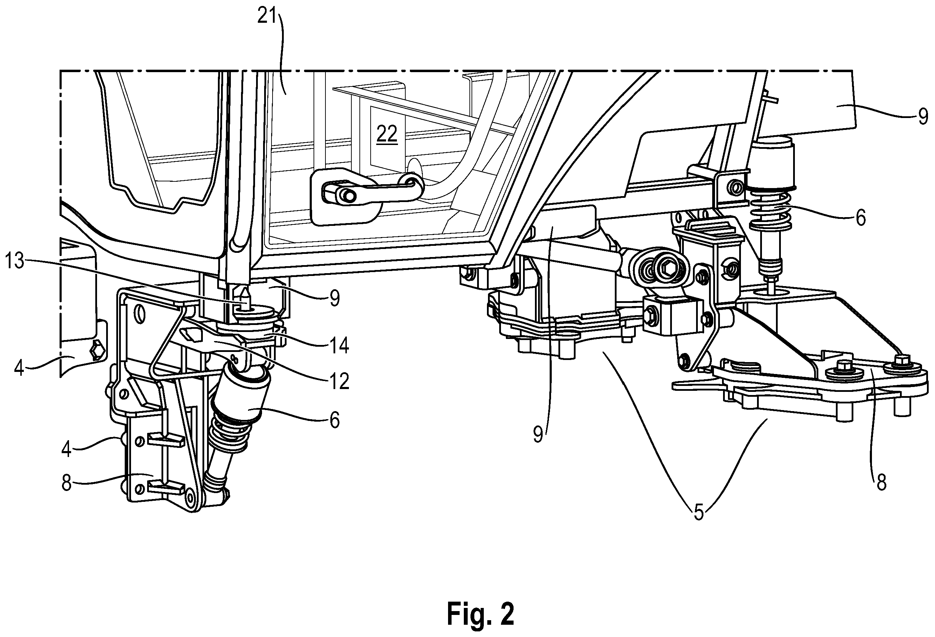

Die **Figur 1** zeigt die landwirtschaftliche Arbeitsmaschine **3,** die hier als Traktor ausgebildet ist. Die Arbeitsmaschine **3** umfasst eine Fahrerkabine **2** sowie einen Maschinenrahmen **7,** wobei die Fahrerkabine **2** eine Kabinenlagerung **1** umfasst, mittels der ein Kabinenrahmen **11** der Fahrerkabine **2** gemäß **Figur 2** mit dem Maschinenrahmen **7** verbunden ist. An dem Kabinenrahmen **11** sind Raumbegrenzungselemente **21** zur Begrenzung eines Innenraumes **22** der Fahrerkabine 2 angeordnet. Hierzu umfasst die Kabinenlagerung **1** zwei vordere Lagerstellen **4** sowie zwei hintere Lagerstellen **5.** Die Lagerstellen **4, 5** verbinden den Kabinenrahmen **11** mit dem Maschinenrahmen **7** derart, dass eine Dämpfung von Vertikalbewegungen stattfindet. Hierzu weisen die Lagerstellen **4, 5** jeweils ein Dämpfermodul **6** auf.

Sowohl die vorderen Lagerstellen **4** als auch die hinteren Lagerstellen **5** umfassen jeweils ein unteres Verbindungselement **8,** mittels dessen die Kabinenlagerung **1** an dem Maschinenrahmen **7** der Arbeitsmaschine **3** verbunden ist. Weiterhin umfassen die Lagerstellen **4, 5** jeweils ein oberes Verbindungselement **9,** mittels dessen die Kabinenlagerung **1** an einem Rahmenabschnitt **10** des Kabinenrahmes **11** der Fahrerkabine **2** verbunden ist. Die Befestigung der oberen Verbindungselemente **9** mit dem Rahmenabschnitt **10** und der unteren Verbindungselemente **8** mit dem Maschinenrahmen **7** kann beispielsweise mittels einer Schraubenverbindung erfolgen.

Die beiden vorderen Lagerstellen **4** umfassen ferner jeweils ein Querverbindungselement **12.**

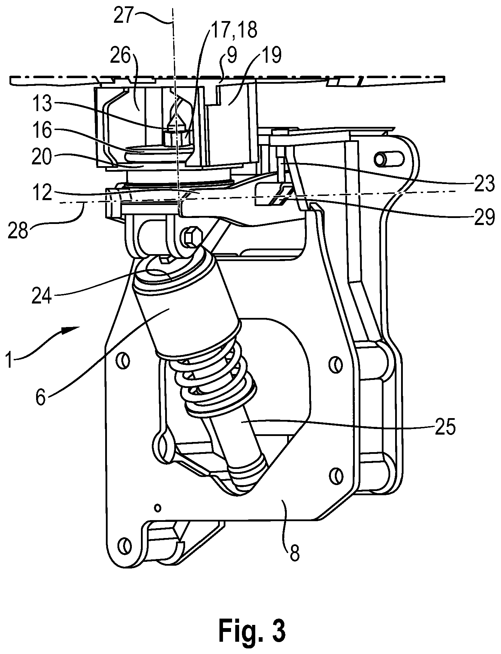

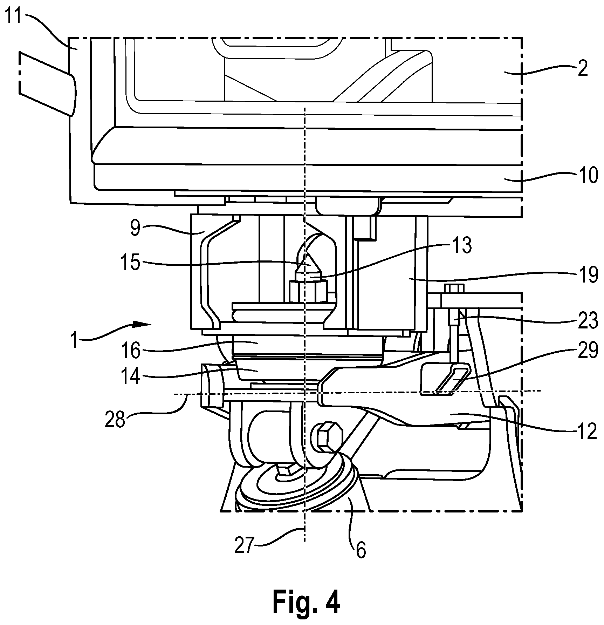

Eine detaillierte Darstellung einer vorderen Lagerstelle **4** ist den **Figuren 3** **und** **4** zu entnehmen. Die nachfolgenden Ausführungen zu der gezeigten vorderen Lagerstelle **4** gelten für beide vorderen Lagerstellen **4** der Kabinenlagerung **1.**

Das Querverbindungselement **12** ist in einem Betriebszustand der Fahrerkabine **2** schwenkbeweglich mit dem unteren Verbindungselement **8** verbunden. Weiterhin ist ein erstes Ende **24** des Dämpfermoduls **6** schwenkbeweglich mit dem Querverbindungselement **12** verbunden. Ein zweites Ende **25** des Dämpfermoduls **6** ist schwenkbeweglich mit dem unteren Verbindungselement **8** verbunden.

Das obere Verbindungselement **9** der vorderen Lagerstelle **4** wird von einem U-Profil gebildet, welches ein seitlich offenes Profilteil **19** ist. Die seitliche Öffnung bietet den Vorteil eines guten Zugangs in den von dem offenen Profilteil **19** gebildeten Hohlraum **26.** Dies ist, wie später noch erläutert wird, besonders vorteilhaft für die Montage. Das seitlich offene Profilteil **19** hat eine untere, horizontal orientierte Basis **20,** die von einem Kopplungszapfen **13** in vertikale Richtung durchdrungen wird, wie später ebenfalls noch erläutert wird.

Das Querverbindungselement **12** weist den im Wesentlichen in vertikale Richtung erstreckenden Kopplungszapfen **13** auf, wie insbesondere den **Figuren 3** **und** **4** entnommen werden kann. Der Kopplungszapfen **13** ist als integraler Bestandteil des Querverbindungselement **12** ausgebildet. Alternative Ausführungen, wie beispielsweise, dass der Kopplungszapfen **13** mittels einer formschlüssigen, kraftschlüssigen oder stoffschlüssigen Verbindung mit einem Grundkörper des Querverbindungselements **12** in Kraft übertragender Weise verbunden ist, sind ebenfalls denkbar. Der Kopplungszapfen **13** koppelt unter Zwischenschaltung eines Dämpfungselements **14** das Querverbindungselement **12** mit dem oberen Verbindungselement **9.** Hierbei ist vorgesehen, dass der Kopplungszapfen **13** das Dämpfungselement **14** in vertikale Richtung durchdringt. Ein Endabschnitt **15** des Kopplungszapfens **13** steht in vertikale Richtung über eine oberes Ende **16** des Dämpfungselements **14** vor.

Zumindest der Endabschnitt **15** des Kopplungszapfens **13** wirkt mit einem Anschlagmittel **17** zusammen. Hier und vorzugsweise ist der Endabschnitt **15** mit einem Außengewinde versehen und das Anschlagmittel **17** ist von einer mit einem Innengewinde versehenen Schraubenmutter **18** gebildet. Um das obere Verbindungselement **9** nunmehr an dem Kopplungszapfen **13** lösbar zu fixieren, ist das Anschlagmittel **17** auf den Kopplungszapfen **13** geschraubt.

Bei einer Montage des oberen Verbindungselements **9** mit dem unteren Verbindungselement **8** ist vorgesehen, dass der Kopplungszapfen **13** zumindest annährend vertikal ausgerichtet ist. Das heißt, eine Längsachse **27** des Kopplungszapfens **13** soll bei der Montage der Fahrerkabine **2** auf dem Maschinenrahmen **7** zumindest annährend vertikal ausgerichtet sein. Der Kopplungszapfen **13** ist senkrecht zu einer Längsachse **28** des Querverbindungselements **12** angeordnet. Entsprechend führt eine horizontale Ausrichtung der Längsachse **28** des Querverbindungselements **12** zu einer annährend vertikalen Ausrichtung des Kopplungszapfens **13.** Um diese annährend horizontale Ausrichtung der Längsachse **28** des Querverbindungselements **12** zu erreichen, sieht die erfindungsgemäße Kabinenlagerung **1** für die Montage des oberen Verbindungselements **9** auf dem unteren Verbindungselement **8** ein Kompressionselement **23,** beispielsweise in Form einer Kompressionsschraube, vor. Das Querverbindungselement **12** weist hier und vorzugsweise einen Positionierungssteg **29** auf. Das Kompressionselement **23** wird durch eine Oberseite des unteren Verbindungselements **8** durchgeführt und presst dort auf den Positionierungssteg **29,** was wiederum eine zumindest annährend horizontale Ausrichtung der Längsachse **28** des Querverbindungselements **12** und somit eine zumindest annährend vertikale Ausrichtung des Kopplungszapfens **13** zur Folge hat. Schwenkbewegungen des Querverbindungselements **12** in dem unteren Verbindungselement **8** werden von dem Kompressionselement **23** unterbunden.

Eine annährend vertikale Ausrichtung des Kopplungszapfens **13** bringt den Vorteil mit sich, dass die Fahrerkabine **2** mit dem daran befindlichen oberen Verbindungselement **9** in eine vertikale Richtung auf den Kopplungszapfen **13** aufgesetzt werden kann. Optimalerweise sind alle Kopplungszapfen **13** der unteren Verbindungselemente **8** vertikal ausgerichtet, sodass ein Absenken der Fahrerkabine **2** in vertikale Richtung ein Einfädeln des jeweiligen Kopplungszapfens **13** in das zugehörige oberen Verbindungselemente **9** bewirkt. An dem Kopplungszapfen **13** befindet sich zwischen dem Querverbindungselement **12** und der Basis **20** des oberen Verbindungselements **9** vorteilhafterweise noch das Dämpfungselement **14,** welches vor der Absenkung der Fahrerkabine **2** auf den jeweiligen Kopplungszapfen **13** geschoben ist. Sind die Kopplungszapfen **13** nunmehr durch die Basis **20** des oberen Verbindungselements **9** geschoben, kann durch das seitlich offene Profilteil **19** das Anschlagmittel **17,** beispielsweise in Form der Schraubenmutter **18,** an dem oberen Verbindungelement **9** fixiert werden.

Nach der Befestigung des Anschlagmittels **17** wird das Kompressionselement **23** zumindest soweit gelöst, dass der Positionierungssteg **29** nicht mehr festgestellt ist, sondern das Querverbindungselement **12** zumindest in vertikale Richtung soweit geschwenkt werden kann, wie das Dämpfermodul **6** dies zulässt. Ggf. kann das Kompressionselement **23** in diesem Zustand vollständig entfernt werden.

Eine weitere hier nicht dargestellte Ausführungsform der Kabinenlagerung sieht mindestens ein Dämpfungsmittel zur Dämpfung von Roll- und Wankbewegungen vor, wobei sich dieses Dämpfungsmittel zumindest im Wesentlichen horizontal erstreckt. Das Dämpfungsmittel ist beispielweise als im Wesentlichen horizontal orientierter Führungsstab ausgeführt. An seinen einander gegenüberliegenden Enden ist das Dämpfungsmittel an den beiden vorderen Lagerstellen und/oder an den beiden hinteren Lagerstellen gelenkig gelagert.

### Bezugszeichenliste

- 1: Kabinenlagerung
- 2: Fahrerkabine
- 3: Arbeitsmaschine
- 4: Lagerstelle
- 5: Lagerstelle
- 6: Dämpfermodul
- 7: Maschinenrahmen
- 8: Verbindungselement
- 9: Verbindungselement
- 10: Rahmenabschnitt
- 11: Kabinenrahmen
- 12: Querverbindungselement
- 13: Kopplungszapfen
- 14: Dämpfungselements
- 15: Endabschnitt
- 16: Ende
- 17: Anschlagmittel
- 18: Schraubenmutter
- 19: Profilteil
- 20: Basis
- 21: Raumbegrenzungselemente
- 22: Innenraum
- 23: Kompressionselement
- 24: Ende
- 25: Ende
- 26: Hohlraum
- 27: Längsachse
- 28: Längsachse
- 29: Positionierungssteg

## Patentansprüche

1. Kabinenlagerung (1) für eine Fahrerkabine (2) einer landwirtschaftlichen Arbeitsmaschine (3), insbesondere eines Traktors, umfassend
- zwei vordere Lagerstellen (4),
- zwei hintere Lagerstellen (5),
wobei die Lagerstellen (4, 5) jeweils ein Dämpfermodul (6) zur Dämpfung von Vertikalbewegungen umfassen, über die die Fahrerkabine (2) beweglich an einem Maschinenrahmen (7) der Arbeitsmaschine (3) lagerbar ist,
wobei die Lagerstellen (4, 5) jeweils ein unteres Verbindungselement (8) zur Verbindung mit dem Maschinenrahmen (7) der Arbeitsmaschine (3) aufweisen,
wobei die Lagerstellen (4, 5) jeweils ein oberes Verbindungselement (9) zur Verbindung mit einem Rahmenabschnitt (10) eines Kabinenrahmens (11) der Fahrerkabine (2) aufweisen,
**dadurch gekennzeichnet, dass**
die vorderen Lagerstellen (4) jeweils ein Querverbindungselement (12) umfassen,
wobei das jeweilige Querverbindungselement (12) schwenkbeweglich sowohl mit dem jeweiligen Dämpfermodul (6) als auch dem unteren Verbindungselement (8) der zugehörigen Lagerstelle (4) verbunden ist,
wobei das jeweilige Querverbindungselement (12) einen sich zumindest im Wesentlichen in vertikale Richtung erstreckenden Kopplungszapfen (13) umfasst,
wobei das Querverbindungselement (12) mittels des Kopplungszapfens (13) unter Zwischenschaltung eines Dämpfungselements (14) mit dem oberen Verbindungselement (9) gekoppelt ist.

2. Kabinenlagerung (1) nach Anspruch 1, **dadurch gekennzeichnet, dass** der Kopplungszapfen (13) das Dämpfungselement (14) in vertikale Richtung durchdringt, wobei ein Endabschnitt (15) des Kopplungszapfens (13) in vertikale Richtung über ein oberes Ende (16) des Dämpfungselements (14) übersteht.

3. Kabinenlagerung (1) nach Anspruch 2, **dadurch gekennzeichnet, dass** der Kopplungszapfen (13) in seinem Endabschnitt (15) mit einem Anschlagmittel (17) zusammenwirkt, der einen vertikalen Anschlag für das Dämpfungselement (14) bereitstellt, wobei vorzugsweise der Kopplungszapfen (13) in seinem Endabschnitt (15) mit einem Außengewinde versehen ist und das Anschlagmittel (18) von einer mit einem Innengewinde versehenen Schraubenmutter (19) gebildet ist, die auf den Endabschnitt (15) des Kopplungszapfens (13) aufgeschraubt ist.

4. Kabinenlagerung (1) nach einem der vorhergehenden Ansprüche, **dadurch gekennzeichnet, dass** das obere Verbindungselement (9) von einem U-förmigen, seitlich offenen Profilteil (19) gebildet ist.

5. Kabinenlagerung (1) nach Anspruch 4, **dadurch gekennzeichnet, dass** der Kopplungszapfen (13) eine untere, horizontal orientierte Basis (20) des Profilteils (19), vorzugsweise zentral, in vertikale Richtung durchdringt.

6. Kabinenlagerung (1) nach einem der vorhergehenden Ansprüche, **dadurch gekennzeichnet, dass** der Kopplungszapfen mittels einer formschlüssigen, kraftschlüssigen oder stoffschlüssigen Verbindung mit einem Grundkörper des Querverbindungselements in Kraft übertragender Weise verbunden ist oder der Kopplungszapfen (13) als integraler Bestandteil des Querverbindungselements (12) ausgebildet ist.

7. Kabinenlagerung (1) nach einem der vorhergehenden Ansprüche, **gekennzeichnet durch** zumindest ein Kompressionselement (23), vorzugsweise einer Kompressionsschraube, welches dazu vorgesehen und eingerichtet ist, das Querverbindungelement (12) in einem Montagezustand der Fahrerkabine (2) auf dem Maschinenrahmen (7) zumindest annährend horizontal auszurichten.

8. Kabinenlagerung nach einem der vorhergehenden Ansprüche, **gekennzeichnet durch** mindestens ein Dämpfungsmittel zur Dämpfung von Roll- und Wankbewegungen, wobei vorzugsweise das Dämpfungsmittel sich zumindest im Wesentlichen horizontal erstreckt.

9. Kabinenlagerung nach Anspruch 8, **dadurch gekennzeichnet, dass** das Dämpfungsmittel als ein zumindest im Wesentlichen horizontal orientierter Führungsstab ausgeführt ist, der an seinen einander gegenüberliegenden Enden an den beiden vorderen Lagerstellen oder an den beiden hinteren Lagerstellen gelenkig gelagert ist.

10. Fahrerkabine (2) für eine landwirtschaftliche Arbeitsmaschine (3), insbesondere einen Traktor, umfassend einen Kabinenrahmen (11), an dem Kabinenrahmen (11) angeordnete Raumbegrenzungselemente (21) zur Begrenzung eines Innenraums (22) der Fahrerkabine (2) sowie eine Kabinenlagerung (1) zur Lagerung der Fahrerkabine (2) an einem Maschinenrahmen (7) der Arbeitsmaschine (3), **dadurch gekennzeichnet, dass** die Kabinenlagerung (1) gemäß einem der vorhergehenden Ansprüche ausgebildet ist.

11. Landwirtschaftliche Arbeitsmaschine (3), insbesondere Traktor, umfassend einen Maschinenrahmen (7) sowie eine an dem Maschinenrahmen (7) gelagerte Fahrerkabine (2), **dadurch gekennzeichnet, dass** die Fahrerkabine (2) gemäß Anspruch 10 ausgebildet ist.
